# EUROPÄISCHE PATENTSCHRIFT

(11) **EP 1 785 550 B1**
(45) Veröffentlichungstag und Bekanntmachung des Hinweises auf die Patenterteilung: **12.12.2012**
(21) Anmeldenummer: 06021755.1
(22) Anmeldetag: 17.10.2006
(51) Int. Cl.: E04G 7/30, E04G 1/12, E04G 11/48, E04C 3/08, E04C 3/04

(54) **Verbindungseinrichtung**
Connection device
Dispositif de connection

(30) Priorität: 11.11.2005 DE 202005017667 U
(43) Veröffentlichungstag der Anmeldung: 16.05.2007
(73) Patentinhaber: B & K Braun GmbH, 76307 Karlsbad (DE)
(72) Erfinder: Braun, Hartmut, 76307 Karlsbad (DE); Hauser, Matthias, 75210 Keltern (DE)
(74) Vertreter: Prinz & Partner

(56) Entgegenhaltungen:
- EP-A- 1 291 470
- EP-A- 1 375 772
- DE-A1- 2 634 465
- GB-A- 2 326 208

## Beschreibung

Die Erfindung betrifft eine Verbindungseinrichtung, mit der Gerüstteile formschlüssig zug- und druckfest miteinander verbindbar sind.

Für die Erstellung von temporären Bauten wie Messeständen, Konzertbühnen etc. werden heutzutage oftmals sogenannte Traversensysteme als Traggerüst eingesetzt. Diese bestehen hauptsächlich aus Systemformteilen, die variabel zusammensetzbar sind, so dass sich zahlreiche Gestaltungsmöglichkeiten ergeben. Da an den Traversensystemen zum Teil erhebliche Lasten (z.B. Großbildleinwände, Monitore, Lautsprecher, Beleuchtungseinrichtungen) angreifen, müssen auch die Verbindungen zwischen den einzelnen Gerüstbauteilen des Traversensystems auf die zuverlässige Übertragung hoher Kräfte ausgelegt sein. Gängig ist eine Bolzenverbindung, wobei der Bolzen durch fluchtende Öffnungen zweier zusammengesteckter Gerüstbauteile eingesetzt wird. Zur Sicherung des Bolzens ist in der Regel wenigstens ein Splint vorgesehen, der den Bolzen in seinem montierten Zustand hält.

Derartige Bolzenverbindungen sind allerdings, was die Montage und Demontage betrifft, verbesserungsbedürftig. Dies betrifft zum einen die Splinte, die vom Monteur als lose, separate Teile vorgehalten werden müssen, weshalb es leicht möglich ist, dass Splinte beim Auf- oder Abbau des Traversensystems verloren gehen. Zum anderen gibt es Verbesserungsbedarf beim Einsetzen oder Lösen der Bolzen. Um auftretende Kräfte sicher übertragen zu können, müssen die Verbindungen möglichst starr, d.h. ohne Spiel ausgeführt sein. Die zusammengesteckten Gerüstbauteile bilden daher eine Preßpassung aus, so dass es einer gewissen Kraft bedarf, um die Bolzen entgegen dem Reibschluß in ihre endgültige Montageposition bzw. aus ihrer Montageposition zu bewegen. In der Regel wird daher mit einem Hammer auf das jeweilige axiale Ende des Bolzens geschlagen, um die notwendige Kraft aufzubringen. Dies kann zu unerwünschten Verformungen des Bolzens führen. Durch diese gängige Praxis wird darüber hinaus eine, verglichen mit den separaten Splinten, verbesserte Bolzensicherung an den axialen Bolzenenden erschwert.

Aus der EP 1 291 470 A1 ist eine Verbindungseinrichtung bekannt, bei der eine Sicherungsmutter verwendet wird, die auf ein Gewinde am freien, kleineren Ende des Bolzens aufgeschraubt werden muss.

Aus der GB 2 326 208 A ist ein Steckbolzen bekannt, der eine Verriegelungslasche an seinem vorderen Ende aufweist.

Aus der EP 1 375 772 A1 ist eine Gerüstkonstruktion bekannt, bei der verschiedene Typen von Bolzen zur Verbindung von Gerüstteilen vorgesehen sind.

Aus der DE 26 34 465 A1 ist ein Gerüst bekannt, das mit Befestigungsfingern versehen ist. Am vorderen Ende der Befestigungsfinger ist ein Verriegelungskeil vorgesehen, der mit einem Langloch versehen ist und verschiebbar auf einem Stift angeordnet ist, der am Befestigungsfinger gelagert ist.

Aus der US 4,207,794 ist eine Verbindungseinrichtung gemäß dem Oberbegriff des Anspruchs 1 mit einem Verbindungsbolzen bekannt, der eine konische Spitze und einen Kopf am entgegengesetzten, zylindrischen Ende aufweist. Hinter der konischen Spitze ist eine Sicherungslasche angeordnet, die quer zum Verbindungsbolzen verschiebbar ist.

Aus der DE 31 26 670 A1 und der US 1,402,566 sind zylindrische Bolzen bekannt, die an einem Ende einen Bolzenkopf und am anderen Ende eine Sicherungslasche aufweisen, die um eine Lagerachse schwenkbar am Bolzen angebracht ist.

Erfingdungsgemäß ist eine Verbindungseinrichtung geschaffen, mit der ein erstes Gerüstbauteil und ein zweites Gerüstbauteil formschlüssig zug- und druckfest miteinander verbindbar sind, wobei die Verbindungseinrichtung einen Bolzen aufweist, der im montierten Zustand durch wenigstens eine erste Öffnung im ersten Gerüstbauteil und wenigstens eine zweite Öffnung im zweiten Gerüstbauteil eingesetzt ist, dadurch gekennzeichnet, daß an einem axialen Ende des Bolzens ein Sicherungselement unverlierbar angebracht ist, das den Bolzen in seinem montierten Zustand halten kann, wobei das Sicherungselement relativ zum Bolzen beweglich ist, so daß es zusammen mit dem Bolzen durch die erste und durch die zweite Öffnung geführt werden kann, um die formschlüssige Verbindung herzustellen, und anschließend in eine Sicherungsposition bewegbar ist, in der es ein Lösen des Bolzens aus der ersten und der zweiten Öffnung verhindert, wobei der Bolzen an einem ersten axialen Ende einen Durchmesser aufweist, der größer ist als der Durchmesser der ersten und der zweiten Öffnung, und an einem entgegengesetzten, zweiten axialen Ende konisch verjüngt ist, wobei das Sicherungselement am verjüngten axialen Ende des Bolzens angebracht ist, wobei der Bolzen an einem ersten axialen Ende eine radiale Schulter aufweist, an der zum Lösen des Bolzens ein Hebel angreifen kann, wobei die radiale Schulter durch eine Nut ausgebildet ist und wobei der Bolzendurchmesser vom zweiten axialen Ende aus anwächst, bis er vor der Nut geringfügig größer ist als der Durchmesser der ersten und der zweiten Öffnung. Die Anzahl separat vorzuhaltender Befestigungsmittel wird gegenüber dem Stand der Technik erheblich reduziert, da Bolzen und Sicherungselement nun eine Einheit bilden. Ein Verlust des Sicherungselements ist nicht mehr möglich. Durch diese Möglichkeit der Relativbewegung zwischen Sicherungselement und Bolzen kann der Bolzen auf besonders einfache Art und Weise von einem montierbaren in einen gesicherten Zustand bzw. von einem gesicherten in einen demontierbaren Zustand gebracht werden. Die Führung eines Stiftes in einem Langloch stellt eine einfache und preiswerte Möglichkeit dar, das Sicherungselement einerseits unverlierbar am Bolzen anzubringen und andererseits eine Relativbewegung zwischen Sicherungselement und Bolzen zu ermöglichen. Aufgrund der konischen Form des Bolzens ist lediglich ein Sicherungselement pro Bolzen notwendig. Die notwendigen Kräfte, um den Bolzen in seinen bzw. aus seinem montierten Zustand zu bewegen, können dadurch an einem axialen Ende aufgebracht werden. Auf das entgegengesetzte, zweite axiale Ende muss zur Montage bzw. Demontage der Gerüstbauteile nicht mehr mit einem Hammer eingeschlagen werden. Die Nut, die die radiale Schulter bildet, kann bei der Bolzenherstellung relativ preiswert und ohne großen Aufwand eingearbeitet werden. Darüber hinaus könnte diese Nut bei existierenden Bolzen auch sehr leicht nachgerüstet, d.h. nachträglich eingefräst werden. Die Nut bietet dann, genau wie der Bolzenkopf, beim Lösen des Bolzens eine gute Angriffsmöglichkeit für den Hebel. Indem der Bolzendurchmesser vom zweiten axialen Ende aus anwächst, bis er vor der Nut geringfügig größer ist als der Durchmesser der ersten und der zweiten Öffnung, wird gewährleistet, dass die Nut im montierten Zustand des Bolzens zugänglich ist, so daß der Hebel bei der Demontage der Gerüstbauteile in die Nut eingreifen kann.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 eine perspektivische Ansicht eines ersten Gerüstbauteils im Bereich eines axialen Bauteilendes;
- Figur 2 eine schematische Schnittansicht erster und zweiter Gerüstbauteile sowie die erfindungsgemäße Verbindungseinrichtung, mit der diese Gerüstbauteile verbunden sind;
- Figuren 3a, 3b und 4a jeweils eine Seitenansicht eines Bolzens der Verbindungseinrichtung gemäß einer ersten und einer zweiten Ausführungsform, die nicht Teil der Erfindung sind; und
- Figur 4b die Seitenansicht eines Bolzens der erfindungsgemäßen Verbindungseinrichtung gemäß einer dritten Ausführungsform.

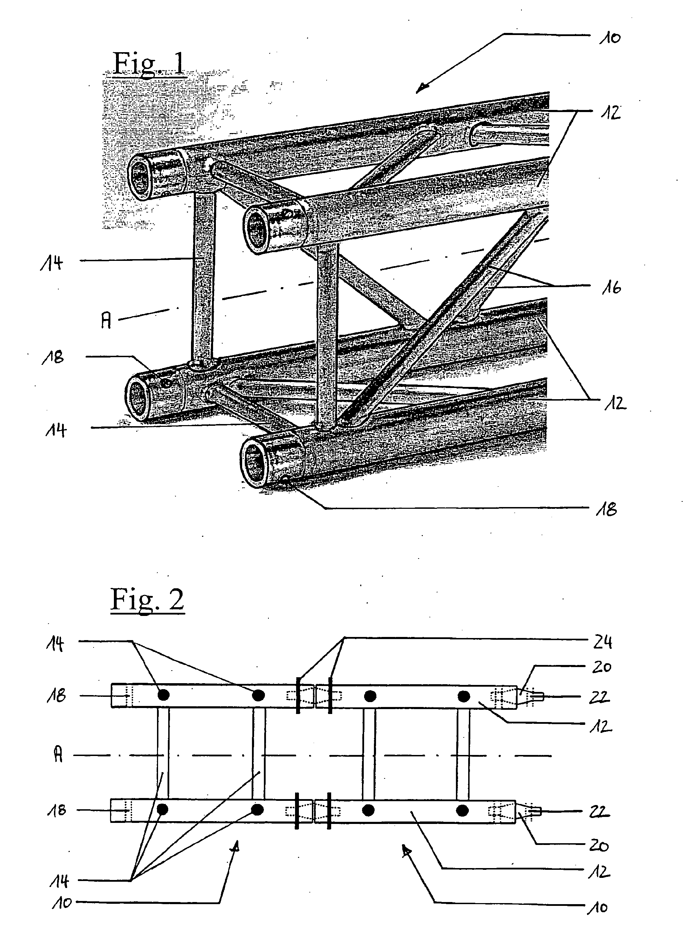

Die Figur 1 zeigt ein axiales Ende eines ersten Gerüstbauteils 10 in perspektivischer Ansicht. In der vorliegenden Ausführungsform ist das erste Gerüstbauteil 10 ein gerades Systemformteil, das vier zu einer Achse A parallele Längsholme 12 aufweist. Jeweils zwei dieser parallelen Längsholme 12 sind durch zur Achse A senkrechte Querstreben 14 verbunden. Vorzugsweise befinden sich diese Querstreben 14 nahe eines axialen Endes des ersten Gerüstbauteils 10.

Die axiale Länge des ersten Gerüstbauteils 10 kann zwischen einigen Zentimetern und mehreren Metern betragen. Mit Ausnahme der sehr kurzen Gerüstbauteile sind die Längsholme 12 zur Erhöhung der Steifigkeit zusätzlich durch Diagonalstäbe 16 verbunden. Die Anzahl der Längsholme 12 eines Gerüstbauteils 10 ist für die erfindungsgemäße Verbindungseinrichtung unerheblich. Somit kann das erste Gerüstbauteil 10 in weiteren Ausführungsformen eine andere Anzahl von Längsholmen 12 aufweisen, wobei diese Anzahl bevorzugt zwischen zwei und acht liegt.

Aus Gründen der Gewichtsminimierung sind die Gerüstbauteile vorzugsweise aus Leichtmetall oder einer Leichtmetallegierung, insbesondere aus einer Aluminiumlegierung hergestellt. Die Längsholme 12 sind, wenigstens abschnittsweise, hohle Rohre, wobei auch die Querstreben 14 oder Diagonalstäbe 16 innen hohl sein können.

In Figur 1 sind an den axialen Enden der Längsholme 12 erste Öffnungen 18 zu erkennen, die zur Verbindung mit einem zweiten Gerüstbauteil 20 (Figur 2) benötigt werden. Alle axialen Enden der ersten Gerüstbauteile 10 eines Traversensystems sind identisch ausgebildet, z.B. entsprechend der Darstellung in Figur 1.

Die Figur 2 zeigt eine schematische Schnittansicht von zwei ersten Gerüstbauteilen 10, die über zweite Gerüstbauteile 20 miteinander verbunden sind. Die zweiten Gerüstbauteile 20 sind in diesem Fall separate Steckverbindungselemente, die sich bis zu ihrer halben axialen Länge in die axialen Enden der Längsholme 12 einführen lassen.

In anderen Ausführungsformen sind die zweiten Gerüstbauteile 20 keine separaten Teile, sondern dauerhaft in die Längsholme der ersten Gerüstbauteile 10 integriert. Die Verbindung erfolgt dann zwischen dem axialen Ende eines Längsholms 12 mit integriertem Steckverbindungselement und dem axialen Ende eines Längsholms 12 ohne Steckverbindungselement.

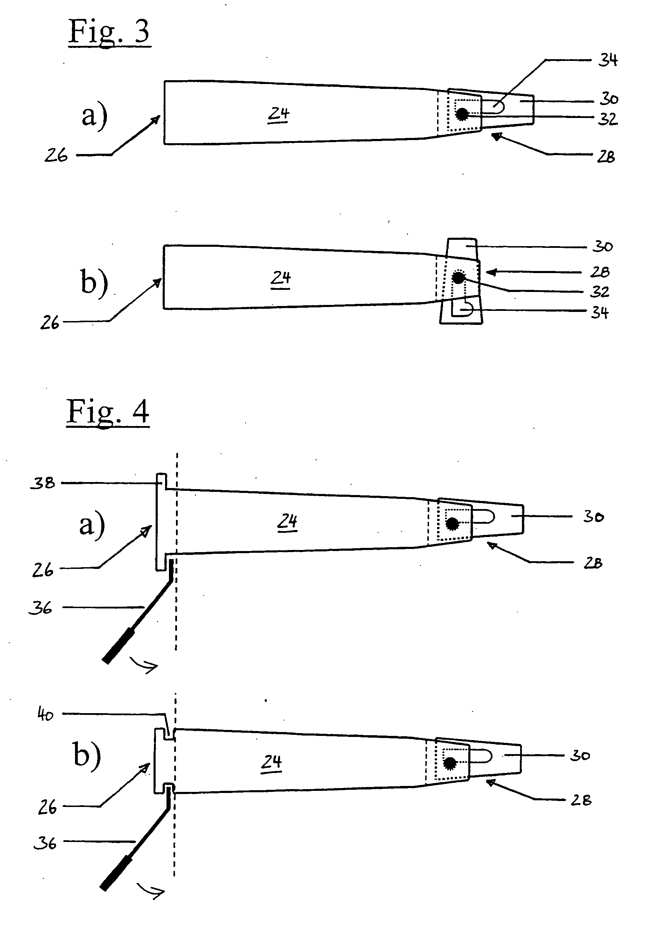

In Figur 2 sind ferner Bolzen 24 im montierten Zustand zu sehen, wobei jeder Bolzen 24 durch eine der ersten Öffnungen 18 im ersten Gerüstbauteil 10 und eine der zweiten Öffnungen 22 im zweiten Gerüstbauteil 20 eingesetzt ist. Genaugenommen umfaßt jede erste Öffnung 18 zwei gegenüberliegende Öffnungen einer Rohrwand, da die ersten Öffnungen 18 in den hohlen Längsholmen 12 vorgesehen sind. Im folgenden werden die in Figur 2 schematisch dargestellten Bolzen 24 anhand der Figuren 3 und 4 näher beschrieben.

Die Figuren 3a und 3b zeigen eine erste Ausführungsform des Bolzens 24, die nicht Teil der Erfindung ist, im Detail, wobei der Bolzen 24 an einem ersten axialen Ende 26 einen Durchmesser aufweist, der größer ist als der Durchmesser der ersten und zweiten Öffnung 18, 22. An einem entgegengesetzten, zweiten axialen Ende 28 ist der Bolzen 24 konisch verjüngt und weist ein Sicherungselement 30 auf, das unverlierbar am zweiten axialen Ende 28 angebracht ist. Der Bolzen 24 ist an seinem verjüngten Ende 28 geschlitzt, wobei das Sicherungselement 30 in diesen Schlitz eingeführt ist. Orthogonal zur Schlitzebene ist ein Führungsstift 32 vorgesehen, der auf beiden Seiten des Schlitzes am Bolzen 24 befestigt ist und durch ein Langloch 34 im Sicherungselements 30 ragt.

Das Sicherungselement 30 ist ein längliches Plättchen mit relativ geringer Dicke, so daß es mit Spiel in den Schlitz im Bolzen 24 eingeführt und relativ zum Bolzen 24 verschoben und/oder verschwenkt werden kann. Die Breite des Sicherungselements 30 entspricht ungefähr dem Durchmesser des Bolzens 24 an seinem verjüngten, zweiten axialen Ende 28. Die Länge des Sicherungselements 30 ist deutlich größer als der Bolzendurchmesser am ersten axialen Ende und damit auch größer als die Durchmesser der ersten und zweiten Öffnung 18, 22.

Ein Vergleich der Figuren 3a und 3b macht deutlich, daß das Sicherungselement 30 relativ zum Bolzen 24 beweglich ist. In der Position gemäß Figur 3a erstreckt sich das Sicherungselement 30 in seiner Längsrichtung parallel zur Bolzenachse. Somit kann es zusammen mit dem Bolzen 24 durch die erste Öffnung 18 und die zweite Öffnung 22 der Gerüstbauteile 10, 20 geführt werden, um eine formschlüssige Verbindung herzustellen. Anschließend ist das Sicherungselement 30 in eine Sicherungsposition (Figur 3b) bewegbar, in der sich das Sicherungselement 30 quer zur Bolzenachse erstreckt. In dieser Position ragt das Sicherungselement 30 radial über den Bolzen 24 sowie die erste und zweite Öffnung 18, 22 hinaus und verhindert ein Lösen des Bolzens 24 aus der ersten und zweiten Öffnung 18, 22.

Um ein erstes Gerüstbauteil 10 und ein zweites Gerüstbauteil 20 formschlüssig zug- und druckfest miteinander zu verbinden, muß zunächst die erste Öffnung 18 des ersten Gerüstbauteils 10 und die zweite Öffnung 22 des zweiten Gerüstbauteils 20 fluchtend miteinander ausgerichtet werden. Danach kann der Bolzen 24 in einer Stellung gemäß Figur 3a mit dem Sicherungselement 30 voraus in die erste und die zweite Öffnung 18, 22, eingesetzt werden. Beim Einschieben des Bolzens 24 stellt sich ein Reibschluß zwischen dem wenigstens abschnittsweise konisch ausgebildeten Bolzen 24 und der ersten und/oder der zweiten Öffnung 18, 22 ein. Unter Umständen muß z.B. mit einem Hammer auf das erste axiale Ende 26 des Bolzens 24 geschlagen werden, damit der Bolzen 24 seinen montierten Zustand einnimmt. Im montierten Zustand ragt das Sicherungselement 30 aus dem ersten Gerüstbauteil 10, genauer aus dem Längsholm 12 des ersten Gerüstbauteils 10 heraus und kann in eine Sicherungsposition gemäß Figur 3b bewegt werden. Dies geschieht vorzugsweise durch Verschwenken und anschließendes Verschieben des Sicherungselements 30 relativ zum Bolzen 24. Vorzugsweise ist der Bolzen 24 so eingesetzt, daß die Verschiebung des Sicherungselements 30 in eine Sicherungsposition von der Schwerkraft unterstützt ist (vgl. Figur 3b).

Bei einer Demontage des ersten und zweiten Gerüstbauteils 10, 20 wird das Sicherungselement 30 entsprechend umgekehrt zunächst entgegen der Schwerkraft verschoben und anschließend verschwenkt, so daß sich der Bolzen 24 wieder in einer Position gemäß Figur 3a befindet. Er kann dann durch die erste und die zweite Öffnung 18, 22 in Richtung vom zweiten axialen Ende 28 zum ersten axialen Ende 26 aus den Öffnungen 18, 22 herausgezogen werden. Unter Umständen sitzt der Bolzen 24 dabei so fest, daß zum Lösen des Reibschlusses z.B. mit einem Hammer auf das zweite axiale Ende 28 geschlagen werden muß. Das Sicherungselement 30 sowie seine Befestigung über den Führungsstift 32 müssen dementsprechend robust ausgebildet sein.

In den Figuren 4a und 4b ist eine zweite und dritte Ausführungsform des Bolzens 24 zu sehen, wobei die Ausführungsform in Figur 4a keine erfindungsgemäße Ausführungsform zeigt. Wie in der ersten Ausführungsform weisen die dargestellten Bolzen 24 am ersten axialen Ende 26 einen Durchmesser auf, der größer ist als der Durchmesser der ersten und zweiten Öffnung 18, 22. Am entgegengesetzten, zweiten axialen Ende 28 sind die beiden Bolzen 24 konisch verjüngt und mit jeweils einem Sicherungselement 30 versehen.

Am ersten axialen Ende 26 weisen die beiden Bolzen 24 gemäß der zweiten und dritten Ausführungsform eine radiale Schulter auf, an der zum Lösen des Bolzens 24 ein Hebel 36 angreifen kann. Der Hebel 36 ist in den Figuren 4a und 4b unter Vernachlässigung der Größenverhältnisse lediglich schematisch angedeutet.

In Figur 4a ist die radiale Schulter durch einen Bolzenkopf 38 des Bolzens 24 gebildet. Von seinem zweiten axialen Ende 28 aus gesehen erreicht der Bolzen 24, infolge seines konischen Zuschnitts, vorzugsweise vor der axialen Schulter einen Durchmesser, der bereits geringfügig größer ist als der Durchmesser der ersten und der zweiten Öffnung 18, 22. Damit ist gewährleistet, daß der Bolzenkopf 38 auch in einem montierten Zustand des Bolzens 24 nicht am ersten Gerüstbauteil 10 anliegt. Die Außenkante des ersten Gerüstbauteils 10 im montierten Zustand des Bolzens 24 ist in der Figur 4a gestrichelt dargestellt. In den Zwischenraum zwischen dem Bolzenkopf 38 und dem ersten Gerüstbauteil 10 kann der Hebel 36 eingreifen, sich am ersten Gerüstbauteil 10 abstützen und eine axiale Kraft auf den Bolzen 24 ausüben. Diese Kraft ist vom zweiten axialen Ende 28 in Richtung zum ersten axialen Ende 26 gerichtet und bewirkt ein Lösen des Bolzens 24 aus seinem montierten Zustand.

In der erfindungsgemäßen Ausführungsform des Bolzens 24 gemäß Figur 4b ist die radiale Schulter durch eine Nut 40 gebildet. Wiederum wächst der Bolzendurchmesser vom zweiten axialen Ende 28 aus an, bis er vor der Nut 40 geringfügig größer ist, als der Durchmesser der ersten und der zweiten Öffnung 18, 22. Im montierten Zustand ist die radiale Schulter ungefähr bündig mit der Außenkante des ersten Gerüstbauteils 10. Dieser Zustand ist in Figur 4b angedeutet, wobei die gestrichelte Linie die Außenkante des ersten Gerüstbauteils 10 darstellt.

Die Bolzen 24 gemäß der Figuren 4a und 4b sind besonders bevorzugte Ausführungsformen. Sie bieten den Vorteil, daß bei der Demontage der Gerüstbauteile 10, 20 nicht auf das verjüngte, zweite axiale Ende 28 des Bolzens 24 geschlagen werden muß, sondern die notwendige Kraft durch den Hebel 36, der an einer axialen Schulter des Bolzens 24 angreift, aufgebracht wird. Somit kann am zweiten axialen Ende 28 des Bolzens 24 ein Sicherungselement 30 angebracht werden, welches auch bei der Demontage des ersten und zweiten Gerüstbauteils 10, 20 nicht durch Hammerschläge beschädigt wird.

## Patentansprüche

1. Verbindungseinrichtung, mit der ein erstes Gerüstbauteil (10) und ein zweites Gerüstbauteil (20) formschlüssig zug- und druckfest miteinander verbindbar sind, wobei die Verbindungseinrichtung einen Bolzen (24) aufweist, der im montierten Zustand durch wenigstens eine erste Öffnung (18) im ersten Gerüstbauteil (10) und wenigstens eine zweite Öffnung (22) im zweiten Gerüstbauteil (20) eingesetzt ist, wobei an einem axialen Ende (26, 28) des Bolzens (24) ein Sicherungselement (30) unverlierbar angebracht ist, das den Bolzen (24) in seinem montierten Zustand halten kann, wobei das Sicherungselement (30) relativ zum Bolzen (24) beweglich ist, so dass es zusammen mit dem Bolzen (24) durch die erste und durch die zweite Öffnung (18, 22) geführt werden kann, um die formschlüssige Verbindung herzustellen, und anschließend in eine Sicherungsposition bewegbar ist, in der es ein Lösen des Bolzens (24) aus der ersten und der zweiten Öffnung (18, 22) verhindert, wobei der Bolzen (24) an einem ersten axialen Ende (26) einen Durchmesser aufweist, der größer ist als der Durchmesser der ersten und der zweiten Öffnung (18, 22), und an einem entgegengesetzten, zweiten axialen Ende (28) konisch verjüngt ist, wobei das Sicherungselement (30) am verjüngten axialen Ende (28) des Bolzens (24) angebracht ist, wobei der Bolzen (24) an einem ersten axialen Ende (26) eine radiale Schulter aufweist, an der zum Lösen des Bolzens (24) ein Hebel (36) angreifen kann, **dadurch gekennzeichnet, daß** die radiale Schulter durch eine Nut (40) ausgebildet ist und daß der Bolzendurchmesser vom zweiten axialen Ende (28) aus anwächst, bis er vor der Nut (40) geringfügig größer ist als der Durchmesser der ersten und der zweiten Öffnung (18, 22).

2. Verbindungseinrichtung nach Anspruch 1, **dadurch gekennzeichnet, daß** der Bolzen (24) einen Führungsstift (32) aufweist, der durch ein Langloch (34) des Sicherungselements (30) ragt, wobei das Sicherungselement (30) relativ zum Bolzen (24) verschiebbar und/oder verschwenkbar ist.

## Claims

1. A connecting device by means of which a first scaffold component (10) and a second scaffold component (20) can be connected with each other with an interlocking fit in a tension- and pressure-resistant manner, the connecting device having a bolt (24) which is inserted through at least one first opening (18) in the first scaffold component (10) and at least one second opening (22) in the second scaffold component (20) in the mounted state, a securing element (30) being captively mounted to an axial end (26, 28) of the bolt (24), which is adapted to hold the bolt (24) in its mounted state, the securing element (30) being movable with respect to the bolt (24) so that it can be guided through the first and through the second opening (18, 22) along with the bolt (24) to form the interlocking fit, and being then adapted to be moved into a securing position in which it prevents a detaching of the bolt (24) out of the first and the second opening (18, 22), the bolt (24) having at a first axial end (26) a diameter which is larger than the diameter of the first and of the second opening (18, 22), and being tapered at an opposite, second axial end (28), the securing element (30) being mounted to the tapered axial end (28) of the bolt (24), the bolt (24) having at a first axial end (26) a radial shoulder which can be engaged by a lever (36) for detaching the bolt (24), **characterized in that** the radial shoulder is formed by a groove (40) and **in that** the bolt diameter increases from the second axial end (28) until it is slightly larger than the diameter of the first and of the second opening (18, 22) in front of the groove (40).

2. The connecting device according to claim 1, **characterized in that** the bolt (24) has a guiding pin (32) projecting through an oblong hole (34) of the securing element (30), the securing element (30) being adapted to be shifted and/or swiveled with respect to the bolt (24).

## Revendications

1. Dispositif de connexion au moyen duquel un premier composant d'échafaudage (10) et un deuxième composant d'échafaudage (20) peuvent être reliés l'un à l'autre par coopération de formes de manière résistante à la traction et à la pression, le dispositif de connexion présentant un boulon (24) qui, à l'état monté, est inséré à travers au moins un premier orifice (18) dans le premier composant d'échafaudage (10) et au moins un deuxième orifice (22) dans le deuxième composant d'échafaudage (20), un élément de blocage (30) étant monté de manière imperdable sur une extrémité axiale (26, 28) du boulon (24) et étant apte à retenir le boulon (24) dans son état monté, l'élément de blocage (30) étant mobile par rapport au boulon (24) de manière à pouvoir être guidé à travers le premier et à travers le deuxième orifice (18, 22) ensemble avec le boulon (24) pour former la liaison par coopération de formes, et étant ensuite apte à être déplacé dans une position de blocage dans laquelle il empêche un détachement du boulon (24) du premier et du deuxième orifice (18, 22), le boulon (24) présentant à une première extrémité axiale (26) un diamètre supérieur au diamètre du premier et du deuxième orifice (18, 22) et diminuant de façon conique à une deuxième extrémité axiale (28) opposée, l'élément de blocage (30) étant monté sur l'extrémité axiale conique (28) du boulon (24), le boulon (24) présentant à une première extrémité axiale (26) un épaulement radial sur lequel un levier (36) peut s'engager pour détacher le boulon (24), **caractérisé en ce que** l'épaulement radial est réalisé par une gorge (40) et **en ce que** le diamètre du boulon augmente à partir de la deuxième extrémité axiale (28) jusqu'à ce qu'il soit légèrement supérieur au diamètre du premier et du deuxième orifice (18, 22) devant la gorge (40).

2. Dispositif de connexion selon la revendication 1, **caractérisé en ce que** le boulon (24) présente un pion de guidage (32) qui fait saillie à travers un trou oblong (34) de l'élément de blocage (30), l'élément de blocage (30) étant apte à être déplacé et/ou pivoté par rapport au boulon (24).
